# EUROPÄISCHE PATENTSCHRIFT

(11) **EP 4 017 694 B1**
(45) Veröffentlichungstag und Bekanntmachung des Hinweises auf die Patenterteilung: **26.11.2025**
(21) Anmeldenummer: 20749857.7
(22) Anmeldetag: 29.07.2020
(51) Int. Cl.: B29C 33/04, B29C 70/44, B29C 35/02, B30B 1/00, B21D 26/031, B29C 35/04

(54) **VERFAHREN UND VORRICHTUNG ZUM HERSTELLEN EINES BAUTEILS AUS EINEM FASERVERBUNDWERKSTOFF**
METHOD AND DEVICE FOR PRODUCING A COMPONENT FROM A FIBER COMPOSITE MATERIAL
PROCÉDÉ ET DISPOSITIF POUR FABRIQUER UNE PIÈCE EN MATÉRIAU COMPOSITE RENFORCÉ PAR DES FIBRES

(30) Priorität: 22.08.2019 DE 102019005917
(43) Veröffentlichungstag der Anmeldung: 29.06.2022
(73) Patentinhaber: Siempelkamp Maschinen- und Anlagenbau GmbH, 47803 Krefeld (DE)
(72) Erfinder: KÖFFERS, Fabian, 47807 Krefeld (DE); SCHÖLER, Michael, 47509 Rheurdt (DE); SCHÜRMANN, Klaus, 41363 Jüchen (DE); SEBASTIAN, Lothar, 47239 Duisburg (DE)
(74) Vertreter: Keil & Schaafhausen Patentanwälte PartGmbB
(86) Internationale Anmeldenummer: PCT/EP2020/071408
(87) Internationale Veröffentlichungsnummer: WO 2021/032430

(56) Entgegenhaltungen:
- DE-A1- 102017 113 595
- N.N.: "Rauheitsmaße bei Oberflächen von nichtrostendem Stahl, Merkblatt 984", ISER PUBLIKATIONEN, 31 December 2016 (2016-12-31), XP055739412, Retrieved from the Internet <URL:https://www.edelstahl-rostfrei.de/fileadmin/user_upload/ISER/downloads/MB_984_Rauheitsmasse.pdf> [retrieved on 20201013]
- ECKHARD BEYER: "Fertigungstechnik 1 - Oberflächenvorbehandlung", 31 December 2015 (2015-12-31), Dresden, XP055739451, Retrieved from the Internet <URL:https://tu-dresden.de/ing/maschinenwesen/if/lot/ressourcen/dateien/studium/lehrveranstaltungen/download_vorlesungen_ft1/dateien-2015_16-_17/vl2_oberflaechenvorbehandlung?lang=de> [retrieved on 20201013]

## Beschreibung

Die Erfindung betrifft ein Verfahren zum Herstellen eines Bauteils aus einem Faserverbundwerkstoff mit den Schritten
- Einbringen mehrerer Lagen aus mit einer Matrix imprägnierten Fasern auf eine Innenform innerhalb eines zwischen der Innenform und einer Außenform gebildeten Formraums,
- Auflegen einer zur Außenform hin abgedichteten Membran auf die mit der Matrix imprägnierten Faser derart, dass sich zwischen der Außenform und der Membran eine sich entlang der Mantelfläche der Außenform erstreckende Kavität bildet, und
- Beaufschlagen der Kavität mit einem temperierbaren Druckfluid mit einer Temperatur größer dem Schmelzpunkt der Matrix und mit einem Druck größer Umgebungsdruck derart, dass das temperierbares Druckfluid mit dem Druck auf die Membran einwirkt.

Die Erfindung betrifft zudem eine Pressenanordnung zum Herstellen eines Bauteils aus einem Faserverbundwerkstoff auf einer Innenform, mit
- einer Außenform, die mit der Innenform einen Formraum bildet,
- einer zur Außenform hin abgedichteten, mit dieser eine Kavität bildenden Membran
- und einem Druckanschluss zur Befüllung der Kavität mit temperierbarem Druckfluid, so dass Druck und Temperatur auf die Membran wirken können.

Ein derartiges Verfahren und eine derartige Pressenanordnung sind ausführlich in der DE 10 2017 113 595 A1 beschrieben. Die Erfindung resultiert aus einer Weiterentwicklung dieses beschriebenen Verfahrens bzw. dieser beschriebenen Pressenanordnung.

Bevorzugt ist die Membran aus einem Metall hergestellt und trennt innerhalb des Formraums die Kavität ab. Als temperierbares Druckfluid wird in der Regel am sinnvollsten ein Thermoöl verwendet.

Zu Faserverbundwerkstoffen gehörende Organobleche sind aus dem Stand der Technik bekannt und werden vor allem im Flugzeug- und Automobilbau verwendet, um gegenüber herkömmlichen Materialien bei vergleichbarer oder sogar besserer Steifigkeit wesentlich leichtere Bauteile zu erhalten. Derartige Organobleche weisen in der Regel ein Fasergewebe oder ein Fasergelege auf, welches in eine thermoplastische Kunststoffmatrix eingebettet ist, und liegen oftmals als Faser-Matrix-Halbzeuge mit Glas, Aramid oder Kohlenstoff als Faserwerkstoff vor. Die Organobleche resultieren beispielsweise aus konsolidierten Prepreglagen. Da sich Prepregs in einfacher Weise mittels bekannter Methoden der Metallverarbeitung warm umformen lassen, resultieren im Vergleich zu konventionellen duroplastischen Faserverbundwerkstoffen kürzere Prozesszeiten.

Im Bereich des Flugzeugbaus werden in jüngster Zeit im Schnitt halbkreisförmige Rumpfsektionen aus Faserverbundwerkstoff als Unterschale und Oberschale einzeln vorgefertigt und in einer anschließenden Endmontage zu einem fertigen Flugzeugrumpf zusammengesetzt. Die Rumpfsektionen werden in der Regel mittels einer Innenform und einer Außenform in einer C-Rahmenpresse umgeformt.

Bei der Fertigung großer Composite-Bauteile mittels dem Verfahren gemäß DE 10 2017 113 595 A1 ist gewährleistet, dass allseitig ein konstanter Konsolidierungsdruck auf die Flugzeugrumpfhälfte einwirkt. Zudem kann sichergestellt werden, dass der Konsolidierungsdruck, beispielsweise an den Längsrändern der halbkreisförmigen Flugzeugrumpfhälften, eine ausreichend große oder überhaupt vorhandene Normalkomponente zum Bauteil aufweist.

Bei der Fertigung ist jedoch festgestellt worden, dass von gewünscht dickeren Wandstärkenbereichen der Übergang zu den dünneren Wandstärkenbereichen auffällig stufenförmig ausgestaltet ist. Das ist nicht nur unschön, sondern hat beispielsweise bei Flugzeug, Boot- oder Automobilbauteilen, die Eigenschaft Verwirbelungen von Luft oder Wasser an der Oberfläche zu erzeugen.

Ausgehend davon ist es eine Aufgabe der vorliegenden Erfindung, ein Verfahren und eine Pressanordnung anzugeben, mittels denen ein Bauteil aus einem Faserverbundwerkstoff herzustellen ist, das lokal wenigstens eine Verstärkungslage aus mit einer Matrix imprägnierten Fasern auf der im Herstellprozess der Membran zugewandten Seite, aber dennoch eine besonders glatte, stufenlose Oberfläche aufweist.

Die Aufgabe der Erfindung wird verfahrensmäßig durch die Merkmale des Anspruchs 1 und insbesondere dadurch gelöst, dass wenigstens eine ausdehnungsmäßig kleinere Verstärkungslage mit vorwiegend parallel ausgerichteten Fasern mit Hilfe einer Einlegevorrichtung lokal auf einen Teil einer der der Außenform zugewandten Seite einer Basislage aufgelegt wird und anschließend eine Membran mit einer gemittelten Rautiefe von unter 1,0 µm, vorzugsweise unter 0,1 µm einen eingestellten Druck in der Kavität auf das Bauteil ausübt. Vorteilhafte Ausgestaltungen sind in den Unteransprüchen angegeben.

Die Aufgabe der Erfindung wird hinsichtlich der Pressenanordnung durch die Merkmale des Anspruchs 8 und insbesondere dadurch gelöst, dass eine Einlegevorrichtung für das sukzessive Auflegen mehrerer Lagen aus mit einer Matrix imprägnierten Fasern auf die Innenform vorhanden und geeignet ist, wenigstens eine ausdehnungsmäßig kleinere Verstärkungslage lokal auf einen Teil einer der Außenform zugewandten Seite einer Basislage aufzulegen, und dass die Membran mit einer gemittelten Rautiefe von unter 1,0 µm, vorzugsweise unter 0,1 µm so angeordnet und abgedichtet ist, dass ein Druck in der Kavitation die Membran auf die wenigstens eine Verstärkungslage und die Basislage drückt.

Die Verstärkungslage wird also mit einer Einlegevorrichtung auf die Basislage aufgelegt. Die Fasern können dabei so ausgerichtet sein, dass sie einen gewünschten Winkel zu den Fasern der Basislage bilden. Die Präzision bei der Einhaltung des genauen Auflagebereichs einer Verstärkungslage auf die Basislage wird mit einer Einlegevorrichtung erreicht. Verstärkungslagen, beispielsweise in Form von Prepregs besitzen dabei in der Regel eine Dicke von 50 µm bis 200 µm. Die Basislage dagegen kann auch beispielsweise durch ein Organoblech gebildet sein.

Ausgehend von der Grundidee, ein temperierbares Druckfluid als Druck- und Heizmedium in der Kavität zwischen Außenform und Membran zu verwenden, lässt sich allseitig an der Membran ein gleich großer Konsolidierungsdruck, eine gezielte und gleichmäßige Erwärmung der mit der Matrix imprägnierte Faser sowie ein rascher Austausch des temperierbaren Druckfluids zum Kühlen und Erhalten des Bauteils erreichen.

Bei dem Pressvorgang hat sich dann überraschend gezeigt, dass eine Verstärkungslage mit im Wesentlichen parallel ausgerichteten Fasern mittels einer "spiegelglatten" Membran andere Eigenschaften des Bauteils erzeugt als mit bis dahin verwendeten Membranen. Dabei sollte die gemittelte Rautiefe der Membran an der Auflageseite unter 1,0 µm, vorzugsweise unter 0,1 µm, und ganz vorzugsweise sogar unter 0,05 µm liegen. Die nach dem Einlegen der Verstärkungslagen vor dem Pressvorgang deutlich sichtbaren Stufen sind mit einer solchen Membran nach dem Pressvorgang vollständig verschwunden. Stattdessen wird eine völlig glatte Oberfläche erzeugt, und zwar in dem Maße, dass der Übergang von der Basislage zur Verstärkungslage nicht mehr fühlbar ist. Das liegt in Verbindung mit der extrem glatten Membran daran, dass der auf die Membran und damit die mit insbesondere einer thermoplastischen Kunststoffmatrix getränkte Faser aufgrund des temperierbaren Druckfluids einwirkende Pressdruck an jeder Stelle der Membran in Richtung der Normalen der Membran und damit ebenso in Richtung der Stufe der eingelegten Verstärkungslage zu der Basislage wirkt. Jede Stufe wird auf diese Weise zu einer gekrümmten Fläche geglättet. Man vermutet, dass die weitgehende Parallelität der Fasern den Freiraum gibt, auch an der Außenkante die Verstärkungslage so stark pressen zu können, dass ein nicht fühlbarer Übergang zur Basislage ermöglicht wird.

Sowohl für das Verfahren als auch die Pressenanordnung sind die gleichen Erfindungsgegenstände der abhängigen Ansprüche wirksam.

So ist es vorteilhaft, wenn die Membran eine Stärke von 0,05 mm - 0,5 mm aufweist.

Ein vorzugsweise martensitischer Edelstahl als Membran besitzt in dieser Dicke die gewünschte Dehnbarkeit und Zugfestigkeit. Zugleich kann die Membran durch Magnete an der Außenform beim Einlegen der Verstärkungslagen festgehalten werden, solange, bis der Druck so groß ist, dass die Membran sich vom Magneten löst und auf die Verstärkungslage gedrückt wird.

Es ist bevorzugt, wenn die wenigstens eine Verstärkungslage das gleiche Matrixmaterial aufweist wie die Basislage.

Das thermoplastische Matrixmaterial der Basislage und das der Verstärkungslage können dann nach dem Überschreiten des Schmelzpunktes eine Einheit bilden.

Vorzugsweise werden oder sind mehrere, zur Außenform hin immer geringere Flächengrößen aufweisende Verstärkungslagen geschichtet.

Und besonders bevorzugt stehen die zur Außenform hin immer geringere Flächengrößen aufweisende Verstärkungslagen nicht über die darunter befindliche Verstärkungslage über.

Auf diese Weise lassen sich mehrlagige Verdickungen von Verstärkungslagen auf einer Basislage erzeugen, die eine Wölbung mit extrem glatter Oberfläche darstellen.

Mit Vorteil ist vorgesehen, dass die Fasern eine Dicke zwischen 1 und 20 µm haben.

Insbesondere in dem unteren Bereich ist die Faser so dünn, dass eine Stufe mit Hilfe des geschmolzenen schräg verlaufenden Matrixmaterials nicht mehr fühlbar ist. Vielmehr zeigt jeder Schnitt durch das Bauteil im Bereich der Verstärkung einen parabelförmigen Verlauf der Oberfläche als glatte Kurve.

Bevorzugt ist oder wird die Temperatur des temperierbaren Druckfluids auf bis zu 400°C und ein Druck von über 35 bar einstellbar oder eingestellt.

Innenform und Außenform können grundsätzlich eine beliebige Form aufweisen. Im Falle einer Presse kann die Innenform das Unterwerkzeug und die Außenform das Oberwerkzeug darstellen. Noch weiter bevorzugt schließen aufeinander aufliegende Innenform und Außenform an ihren Rändern druckdicht und/oder abdichtend ab und/oder liegen an ihren Rändern berührend aufeinander auf. In diesem Zusammenhang weist das Verfahren bevorzugt den weiteren Schritt Aufsetzen der Außenform auf die Innenform derart, dass Außenform und Innenform an ihren Rändern abdichtend zum Ausbilden des Formraums aufeinander aufliegen und/oder Fixieren und/oder Verspannen der aufeinander aufliegenden Außenform und Innenform gegeneinander, insbesondere mittels der Presse.

Während das Verfahren grundsätzlich mit beliebigen mit der Matrix imprägnierten Fasern durchgeführt werden kann, sind die Fasern bevorzugt als Glasfasern, Aramidfasern und/oder Karbonfasern bzw. Kohlefasern ausgeführt. Ganz besonders bevorzugt ist die mit der thermoplastischen Kunststoffmatrix getränkte Faser als Faser-Matrix-Halbzeug, als Faserverbundwerkstoff und/oder als Organoblech und/oder als Prepreg ausgeführt. Die mit der Matrix imprägnierte Faser ist bevorzugt als eine mit einer thermoplastischen Kunststoffmatrix getränkte Faser ausgeführt.

Nachfolgend wird die Erfindung unter Bezugnahme auf die anliegenden Zeichnungen anhand eines bevorzugten Ausführungsbeispiels näher erläutert.

In den Zeichnungen zeigen
Fig. 1a bis 1c eine Pressenanordnung zum Durchführen des Verfahrens zum Herstellen eines Bauteils aus einem Faserverbundwerkstoff gemäß der Erfindung in einer schematischen Perspektivansicht in drei Verfahrensschritten, und
Fig. 2 einen Querschnitt eines bildbaren Bauteils aus einem Faserverbundwerkstoff.

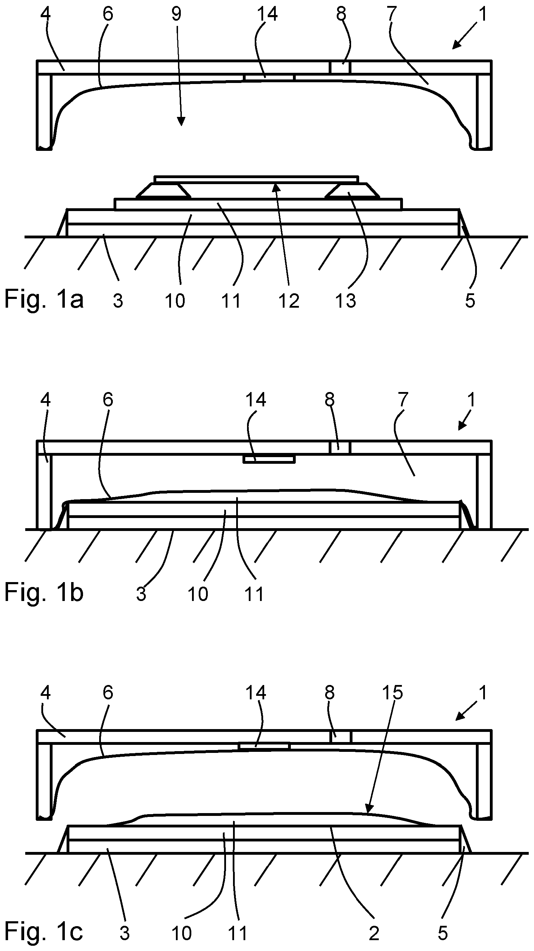

Fig. 1a zeigt schematisch eine Pressenanordnung zum Ausführen eines Verfahrens zum Herstellen eines Bauteils aus einer Basislage und einer Verstärkungslage eines Faserverbundwerkstoff, sowie einer Einlegevorrichtung für die einzelnen Lagen. In dem ersten dargestellten Verfahrensschritt 1a von dreien, erkennt man eine Innenform oder unteres Werkzeug 3 mit einem Pressenrahmen 5 zur Aufnahme der Basislage 10. Den abgehobenen oberen Teil bildet die Außenform 4 oder das obere Werkzeug 4, das in nicht dargestellter Weise auf die Innenform 3 dichtend absenkbar ist. Innenform 3 und Außenform 4 bilden gemeinsam den Formraum 9 zur Erzeugung des Bauteils 2. An der Außenform 4 ist rundum eine Metallmembran 6 abgedichtet angebracht, so dass sich eine Kavität 7 zwischen Außenform 3 und Metallmembran 6 bildet, in die über einen Druckanschluss 8 temperierbares Druckfluid mit einem Druck bis wenigstens 30 bar, vorzugsweise sogar 40 bar und einstellbaren Temperaturen bis beispielsweise 400°C einbringbar ist.

In dem in Fig. 1a dargestellten Zustand ist der durch das temperierbare Druckfluid ausgeübte Druck noch sehr gering, so dass die Metallmembran 6 mittels eines Magneten 14 an der Außenform 4 gehalten wird. In dem dargestellten abgehobenen Zustand der Außenform ist das Einbringen von Basislage 10 und Verstärkungslag(n) (11) mittels einer Einlegevorrichtung 12 möglich. Die bewegliche und verfahrbare Einlegevorrichtung ist in Fig. 1a mit zwei schematisch dargestellten Saugvorrichtungen 13 angedeutet, die beispielsweise eine Verstärkungslage 11 aufnehmen und an ihrem gewünschten Ablageort ablegen kann.

Fig. 1b zeigt den Zustand, in dem Außenform und Innenform zusammengefahren sind. Die Einlegevorrichtung 12 ist aus dem Formraum 9 entfernt worden. Die Kavität 7 ist mit einem temperierbarem Druckfluid, hier beispielsweise Thermoöl, unter hohem Druck gefüllt, so dass sich die Metallmembran von dem Magneten gelöst hat und sich glatt über die vormals stufenartige Übereinanderlagerung von Basislage 10 und Verstärkungslage 11 legt. Die hohen Temperaturen und der hohe Druck bewirken, dass die Stufe "glattgepresst" wird, so dass ein Übergang von Basislage 10 zu Verstärkungslage 11 an der Bauteiloberfläche 15 nicht mehr fühlbar ist. Dazu muss die Verstärkungslage aber eine im Wesentlichen parallele Faseranordnung aufweisen mit Faserstärken zwischen 1 und 20 µm sowie die Metallmembran eine maximale gemittelte Rautiefe von unter 1,0 µm, vorzugsweise unter 0,1 µm, ganz vorzugsweise sogar unter 0,05 µm aufweisen. Das Thermoöl dient als Druck- und Heizmedium, um allseitig über die Metallmembran 6 einen gleich bleibenden Konsolidierungsdruck auf die mit der thermoplastischen Kunststoffmatrix getränkte Faser auszuüben sowie um eine gezielte, gleichmäßige Erwärmung der mit der thermoplastischen Kunststoffmatrix getränkten Faser zu bewirken. Die parallele Verschmelzung der Matrix der Basislage und der Matrix der Verstärkungslage 11 und Abkühlung unter Druck erreicht dann die überraschende Glätte an der Bauteiloberfläche 15.

Der Zustand in Fig. 1c zeigt den Abhebevorgang der Außenform, nachdem der Druck und die Temperatur in der Kavität zurückgenommen wurde und die Metallmembran 5 bereits wieder von dem Magneten 14 angezogen wird.

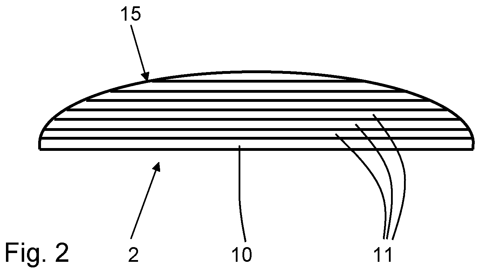

Fig. 2 zeigt ein mögliches Bauteil aus Faserverbundwerkstoff 2 im Querschnitt. Man erkennt die untere Basislage 10, die sich während der Herstellprozesses im Pressenrahmen 6 der Innenform 3 befand. Darüber wurden mehrere Verstärkungslagen 11 geschichtet, die in ihrer Flächengrößen nach oben abnehmen und bei der es keinen Überstand einer Verstärkungslage zu ihrer darunter liegenden gibt. Nach dem Verpressen mit Hilfe der spiegelglatten Metallmembran ist die Bauteiloberfläche sehr glatt und stellt im Schnitt eine Parabelform dar.

### Bezugszeichenliste

| | |
|---|---|
| 1 | Vorrichtung |
| 2 | Bauteil aus Faserverbundwerkstoff |
| 3 | Innenform, unteres Werkzeug |
| 4 | Außenform, oberes Werkzeug |
| 5 | Pressenrahmen |
| 6 | Membran |
| 7 | Druckraum für temperierbares Druckfluid, Kavität |
| 8 | Druckanschluss |
| 9 | Formraum |
| 10 | Basislage |
| 11 | Verstärkungslage |
| 12 | Einlegevorrichtung |
| 13 | Saugvorrichtung |
| 14 | Magnet |
| 15 | Bauteiloberfläche |

## Patentansprüche

1. Verfahren zum Herstellen eines Bauteils aus einem Faserverbundwerkstoff (2) mit den Schritten
- Einbringen mehrerer Lagen (10, 11) aus mit einer Matrix imprägnierten Fasern auf eine Innenform (3) innerhalb eines zwischen der Innenform (3) und einer Außenform (4) gebildeten Formraums (9),
- Auflegen einer zur Außenform hin abgedichteten Membran (6) auf die mit der Matrix imprägnierten Fasern derart, dass sich zwischen der Außenform (4) und der Membran (6) eine sich entlang der Mantelfläche der Außenform erstreckende Kavität (7) bildet, und
- Beaufschlagen der Kavität (7) mit einem temperierbaren Druckfluid mit einer Temperatur größer dem Schmelzpunkt der Matrix und mit einem Druck größer Umgebungsdruck derart, dass das temperierbare Druckfluid mit dem Druck auf die Membran einwirkt,
wobei wenigstens eine ausdehnungsmäßig kleinere Verstärkungslage (11) mit vorwiegend parallel ausgerichteten Fasern mit Hilfe einer Einlegevorrichtung (12) lokal auf einen Teil einer der der Außenform (4) zugewandten Seite einer Basislage (10) aufgelegt wird und anschließend eine Membran (6) mit einer gemittelten Rautiefe von unter 1,0 µm, vorzugsweise unter 0,1 um einen eingestellten Druck in der Kavität auf das Bauteil (2) ausübt.

2. Verfahren gemäß Anspruch 1, **dadurch gekennzeichnet, dass** die Membran (6) eine Stärke von 0,05 mm - 0,5 mm aufweist.

3. Verfahren gemäß Anspruch 1 oder 2, **dadurch gekennzeichnet, dass** die wenigstens eine Verstärkungslage (11) das gleiche Matrixmaterial aufweist wie die Basislage (10).

4. Verfahren gemäß einem der Ansprüche 1 bis 3, **dadurch gekennzeichnet, dass** zur Außenform (4) hin immer geringere Flächengrößen aufweisende Verstärkungslagen (11) geschichtet werden.

5. Verfahren gemäß Anspruch 4, **dadurch gekennzeichnet, dass** die Verstärkungslagen (11) so geschichtet werden, dass die zur Außenform (4) hin immer geringeren Flächengrößen nicht über die darunter befindliche Verstärkungslage überstehen.

6. Verfahren gemäß einem der Ansprüche 1 bis 5, **dadurch gekennzeichnet, dass** die Fasern eine Dicke zwischen 1 und 20 µm haben.

7. Verfahren gemäß einem der Ansprüche 1 bis 6, **dadurch gekennzeichnet, dass** die Temperatur des temperierbaren Druckfluids auf bis zu 400°C und ein Druck von über 35 bar eingestellt werden.

8. Pressenanordnung zum Herstellen eines Bauteils (2) aus einem Faserverbundwerkstoff auf einer Innenform (3), mit
- einer Außenform (4), die mit der Innenform (3) einen Formraum (9) bildet,
- einer zur Außenform (4) hin abgedichteten, mit dieser eine Kavität (7) bildende Membran (6)
- und einem Druckanschluss (8) zur Befüllung der Kavität (7) mit temperierbarem Druckfluid, so dass Druck und Temperatur auf die Membran (6) wirken können,
wobei eine Einlegevorrichtung (12) für das sukzessive Auflegen mehrerer Lagen (10, 11) aus mit einer Matrix imprägnierten Fasern auf die Innenform (3) vorhanden und geeignet ist, wenigstens eine ausdehnungsmäßig kleinere Verstärkungslage lokal auf einen Teil einer der Außenform zugewandten Seite einer Basislage aufzulegen, und dass die Membran mit einer gemittelten Rautiefe von unter 1,0 µm, vorzugsweise unter 0,1 µm so angeordnet und abgedichtet ist, dass ein Druck in der Kavitation die Membran (6) auf die wenigstens eine Verstärkungslage und die Basislage drückt.

9. Pressenanordnung gemäß Anspruch 8, **dadurch gekennzeichnet, dass** die Membran eine Stärke von 0,05 mm - 0,5 mm aufweist.

10. Pressenanordnung gemäß Anspruch 8 oder 9, **dadurch gekennzeichnet, dass** die wenigstens eine Verstärkungslage (11) das gleiche Matrixmaterial aufweist wie die Basislage (10).

11. Pressenanordnung gemäß einem der Ansprüche 8 bis 10, **dadurch gekennzeichnet, dass** zur Außenform (4) hin immer geringere Flächengrößen aufweisende Verstärkungslagen (11) geschichtet sind.

12. Pressenanordnung gemäß Anspruch 11, **dadurch gekennzeichnet, dass** die Verstärkungslagen (11) so geschichtet sind, dass die zur Außenform hin immer geringere Flächengrößen nicht über die darunter befindliche Verstärkungslage überstehen.

13. Pressenanordnung gemäß einem der Ansprüche 8 bis 12, **dadurch gekennzeichnet, dass** die Fasern eine Dicke zwischen 1 und 20 µm haben.

14. Pressenanordnung gemäß einem der Ansprüche 8 bis 13, **dadurch gekennzeichnet, dass** die Temperatur des temperierbaren Druckfluids auf bis zu 400°C und ein Druck von über 35 bar einstellbar ist.

## Claims

1. Method for producing a component from a fiber composite material (2) comprising the steps of
- introducing several layers (10, 11) of fibers impregnated with a matrix on an inner mold (3) within a molding space (9) formed between the inner mold (3) and an outer mold (4),
- placing a membrane (6) sealed towards the outer mold on the fibers impregnated with the matrix so that a cavity (7) extending along the peripheral surface of the outer mold is formed between the outer mold (4) and the membrane (6), and
- applying a temperature-controllable pressure fluid to the cavity (7) at a temperature higher than the melting point of the matrix and at a pressure higher than ambient pressure so that the temperature-controllable pressure fluid acts on the membrane with the pressure,
wherein
at least one reinforcement layer (11) with a smaller dimension and predominantly parallel aligned fibers is applied locally to a part of a side of a base layer (10) facing the outer mold (4) by means of an insertion device (12), and then a membrane (6) with an average roughness depth of less than 1.0 µm, preferably less than 0.1 µm, exerts a set pressure in the cavity on the component (2).

2. Method according to claim 1, **characterized in that** the membrane (6) has a thickness of 0.05 mm to 0.5 mm.

3. Method according to claim 1 or 2, **characterized in that** the at least one reinforcement layer (11) comprises the same matrix material as the base layer (10).

4. Method according to one of the claims 1 to 3, **characterized in that** reinforcement layers (11) with increasingly smaller surface areas are layered toward the outer mold (4).

5. Method according to claim 4, **characterized in that** the reinforcement layers (11) are layered so that the increasingly smaller surface areas towards the outer mold (4) do not protrude beyond the reinforcement layer located below.

6. Method according to one of the claims 1 to 5, **characterized in that** the fibers have a thickness between 1 and 20 µm.

7. Method according to one of the claims 1 to 6, **characterized in that** the temperature of the temperature-controllable pressure fluid is adjusted to up to 400°C and a pressure of over 35 bar.

8. Press assembly for manufacturing a component (2) from a fiber composite material on an inner mold (3), comprising
- an outer mold (4) which forms a molding space (9) with the inner mold (3),
- a membrane (6) which is sealed towards the outer mold (4) and forms a cavity (7) with the outer mold (4)
- and a pressure port (8) for filling the cavity (7) with temperature-controllable pressure fluid so that pressure and temperature can act on the membrane (6),
wherein
an insertion device (12) is provided for successively applying a plurality of layers (10, 11) of fibers impregnated with a matrix onto the inner mold (3) and is suitable for locally applying at least one reinforcement layer with a smaller dimension to a part of one of the sides of a base layer facing the outer mold, and that the membrane with an average roughness depth of less than 1.0 µm, preferably less than 0.1 µm, is arranged and sealed so that a pressure in the cavitation presses the membrane (6) onto the at least one reinforcing layer and the base layer.

9. Press assembly according to claim 8, **characterized in that** the membrane has a thickness of 0.05 mm - 0.5 mm.

10. Press assembly according to claim 8 or 9, **characterized in that** the at least one reinforcement layer (11) comprises the same matrix material as the base layer (10).

11. Press assembly according to one of the claims 8 to 10, **characterized in that** reinforcement layers (11) with increasingly smaller surface areas are layered toward the outer mold (4).

12. Press assembly according to claim 11, **characterized in that** the reinforcement layers (11) are layered so that the increasingly smaller surface areas towards the outer mold do not protrude beyond the reinforcement layer located below.

13. Press assembly according to one of the claims 8 to 12, **characterized in that** the fibers have a thickness between 1 and 20 µm.

14. Press assembly according to one of the claims 8 to 13, **characterized in that** the temperature of the temperature-controllable pressure fluid is adjustable up to 400°C and a pressure of over 35 bar.

## Revendications

1. Procédé de fabrication d'une pièce en matériau composite renforcé par des fibres (2) avec les étapes de :
- introduction de plusieurs couches (10,11) composées de fibres imprégnées avec une matrice sur un moule intérieur (3) à l'intérieur d'un espace de moulage (9) formé entre le moule intérieur (3) et un moule extérieur (4),
- dépôt d'une membrane (6) étanchéifiée vers le moule extérieur sur les fibres imprégnées avec la matrice de telle sorte qu'il se forme une cavité (7) s'étendant le long de la surface d'enveloppe du moule extérieur entre le moule extérieur (4) et la membrane (6), et
- sollicitation de la cavité (7) par un fluide de pression thermorégulé à une température supérieure au point de fusion de la matrice et à une pression supérieure à la pression ambiante de telle manière que le fluide de pression thermorégulé agit avec la pression sur la membrane,
sachant qu'au moins une couche de renfort (11) en termes d'expansion plus petite avec des fibres en majorité orientées parallèlement est localement déposée à l'aide d'un dispositif d'insertion (12) sur une partie d'un côté d'une couche de base (10), éloignée du moule extérieur (4) et une membrane (6) exerce ensuite dans la cavité sur la pièce (2) une pression réglée à une profondeur de rugosité moyenne de moins de 1,0 µm, de préférence inférieure à 0,1 µm.

2. Agencement de presse selon la revendication 1, **caractérisé en ce que** la membrane (6) comporte une épaisseur de 0,05 mm - 0,5 mm.

3. Procédé selon la revendication 1 ou 2, **caractérisé en ce qu'**au moins une couche de renfort (11) comporte le matériau de matrice identique à la couche de base (10).

4. Procédé selon l'une quelconque des revendications 1 à 3, **caractérisé en ce que** des couches de renfort (11) comportant des tailles de surface toujours plus faibles sont disposées vers le moule extérieur (4).

5. Procédé selon la revendication 4, **caractérisé en ce que** les couches de renfort (11) sont disposées de telle sorte que les tailles de surface toujours plus faibles vers le moule extérieur (4) ne dépassent pas de la couche de renfort se trouvant en dessous.

6. Procédé selon l'une quelconque des revendications 1 à 5, **caractérisé en ce que** les fibres possèdent une épaisseur se situant entre 1 et 20 µm.

7. Procédé selon l'une quelconque des revendications 1 à *6, **caractérisé en ce que*** la température du fluide de pression thermorégulé est réglée jusqu'à 400°C et une pression réglée à plus de 35 bars.

8. Agencement de presse pour fabriquer une pièce (2) en matériau composite renforcé par des fibres sur un moule intérieur (3), avec
- un moule extérieur (4), qui forme avec le moule intérieur (3) un espace de moulage (9),
- une membrane (6) étanchéifiée vers le moule extérieur (4) formant une cavité (7) avec celui-ci,
- et un raccord de pression (8) pour remplir la cavité (7) d'un fluide de pression thermorégulé de telle sorte que la pression et la température peuvent agir sur la membrane (6),
sachant qu'un dispositif d'énergie (12) pour le dépôt successif de plusieurs couches (10, 11) de fibres imprégnées avec une matrice sur le moule intérieur (3) est présent et adapté pour déposer localement au moins une couche de renfort en termes d'expansion plus petite sur une partie du côté éloigné du moule extérieur de la couche de base et en ce que la membrane est disposée à une profondeur de rugosité moyenne inférieure à 1,0 µm, de préférence en dessous de 0,1 µm et étanchéifiée de telle sorte qu'une pression pousse dans la cavité la membrane (6) sur au moins une couche de renfort et la couche de base.

9. Agencement de presse selon la revendication 8, **caractérisé en ce que** la membrane comporte une épaisseur de 0,05 mm - 0,5 mm.

10. Agencement de presse selon la revendication 8 ou 9, **caractérisé en ce qu'**au moins une couche de renfort (11) comporte le même matériau de matrice que la couche de base (10).

11. Agencement de presse selon l'une quelconque des revendications 8 à 10, **caractérisé en ce que** des couches de renfort (11) comportant des tailles de surface toujours plus faibles sont disposées vers le moule extérieur (4).

12. Agencement de presse selon la revendication 11, **caractérisé en ce que** les couches de renfort (11) sont disposées de telle manière que les tailles de surface toujours plus faibles vers le moule extérieur ne dépassent pas la couche de renfort se trouvant en dessous.

13. Agencement de presse selon l'une quelconque des revendications 8 à 12, **caractérisé en ce que** les fibres possèdent une épaisseur se situant entre 1 et 20 µm.

14. Agencement de presse selon l'une quelconque des revendications 8 à 13, **caractérisé en ce que** la température du fluide de pression thermorégulé peut être réglée jusqu'à 400°C et à une pression de plus de 35 bars.
